# EUROPÄISCHE PATENTANMELDUNG

(11) **EP 3 614 475 A1**
(43) Veröffentlichungstag der Anmeldung: **26.02.2020**
(21) Anmeldenummer: 18189718.2
(22) Anmeldetag: 20.08.2018
(51) Int. Cl.: H01M 8/0662, H01M 8/04119, H01M 8/0438, H01M 8/0444, H01M 8/04746

(54) **VERFAHREN ZUR BEHANDLUNG WASSERSTOFFHALTIGER UND SAUERSTOFFHALTIGER RESTGASE VON BRENNSTOFFZELLEN SOWIE RESTGASBEHANDLUNGSSYSTEM**

(71) Anmelder: Siemens Aktiengesellschaft, 80333 München (DE)
(72) Erfinder: Brandt, Torsten, 91301 Forchheim (DE); Hertweck, Markus, 91083 Baiersdorf (DE); Putschky, Günter, 91056 Erlangen (DE); Sander, Daniel Christian, 90768 Fürth (DE); Siedler, Stefan, 91325 Adelsdorf (DE); Straub, Fabian, 91093 Heßdorf (DE)

(57) **Zusammenfassung**

Bei einem Verfahren zur Behandlung wasserstoffhaltiger und sauerstoffhaltiger Restgase von Brennstoffzellen (1), wobei die Restgase einem Gaskreislauf (5) zugeführt und ein hierdurch entstehendes Restgasgemisch in dem Gaskreislauf (5) durch eine Einrichtung (8) zur Umsetzung von Wasserstoff und Sauerstoff in Wasser zirkuliert wird, um die Menge an Wasserstoff und Sauerstoff in dem Restgasgemisch zu reduzieren, wird erfindungsgemäß zumindest ein Teil des Restgasgemisches aus dem Gaskreislauf (5) abgeführt.

## Beschreibung

Die Erfindung betrifft ein Verfahren zur Behandlung wasserstoffhaltiger und sauerstoffhaltiger Restgase von Brennstoffzellen gemäß Oberbegriff des Patentanspruchs 1 sowie ein Restgasbehandlungssystem gemäß Oberbegriff des Patentanspruchs 11. Ein derartiges Verfahren bzw. ein derartiges System sind beispielsweise aus der US 3 664 873 A bekannt.

In einer Brennstoffzelle wird üblicherweise durch die Zusammenführung von Wasserstoff und Sauerstoff in einer elektrochemischen Reaktion Energie und Wärme erzeugt, wobei als einziges Nebenprodukt Wasser entsteht. Zu diesem Zweck werden der Wasserstoff in einen Anodengasraum und der Sauerstoff in einen Kathodengasraum der Brennstoffzelle geleitet. Der Wasserstoff kann entweder als reiner Wasserstoff oder als ein wasserstoffhaltiges Brenngas dem Anodengasraum zugeführt werden. Der Sauerstoff kann als reiner Sauerstoff oder auch beispielsweise in Form von Luft dem Kathodengasraum zugeführt werden.

Eine Brennstoffzelle alleine liefert eine Betriebsspannung von unter einem Volt. Daher werden üblicherweise eine Vielzahl von Brennstoffzellen aufeinander gestapelt und zu einem Brennstoffzellenblock zusammengefasst. In der Fachliteratur wird ein solcher Block auch "Stack" genannt. Durch das In-Reihe-Schalten der Brennstoffzellen des Brennstoffzellenblocks kann die Betriebsspannung eines Brennstoffzellensystems einige 100 Volt betragen.

Auch technisch reiner Wasserstoff und Sauerstoff enthalten jedoch Bestandteile (z.B. Inertgasanteile), die nicht an der Reaktion teilnehmen. Diese Bestandteile müssen als Restgase aus der Brennstoffzelle abgeführt werden. In den Restgasen können jedoch auch noch Anteile des jeweiligen Reaktionsgases enthalten sein. Während ein Sauerstoffanteil in der Regel problemlos mit der Umgebungsluft gemischt werden kann, besteht durch einen Wasserstoffanteil eine inhärente Brandgefahr.

Bei bekannten Brennstoffzellensystemen wird deshalb das wasserstoffhaltige Restgas mit Hilfe einer Leitung in einen ungefährdeten Bereich geführt und dort in die Umgebungsluft abgelassen. Ist das Brennstoffzellensystem in einem Einbauraum installiert, handelt es sich bei dem ungefährdeten Bereich beispielsweise um einen Bereich in Überkopfhöhe von Betriebspersonal des Brennstoffzellensystems. In der Nähe des Restgasauslasses ist jedoch immer eine brennbare Gasmischung vorhanden, von der Zündquellen sicher ferngehalten werden müssen.

Aus der DE 10 2006 026 539 A1 ist es bekannt, das wasserstoffhaltige Restgas in einer Mischeinrichtung in Form eines Sinterkörpers mit einem sauerstoffhaltigen Restgas zu vermischen und das dadurch entstehende Gasgemisch in die Umgebungsluft des Brennstoffzellensystems einzuleiten.

In der DE 10 2005 035 743 B4 ist offenbart, die Restgase einem katalytischen Reaktor zuzuführen und dort zu Wasser umzusetzen. Hierdurch kann die Menge wasserstoffhaltigen- und sauerstoffhaltigen Restgases vermieden werden.

Problematischer gestaltet sich die Abfuhr von Restgasen bei Brennstoffzellensystemen, die sich in einem von Außenluft abgeschlossenen Einbauraum befinden.

Aus der US 3 664 873 A ist bereits ein Brennstoffzellensystem mit einem in einem Gehäuse angeordneten Brennstoffzellenmodul bekannt, bei dem sauerstoffhaltiges und wasserstoffhaltiges Restgas des Brennstoffzellenmoduls in die Atmosphäre des Raums zwischen dem Gehäuse und dem Brennstoffzellenmodul abgelassen wird. Zur Vermeidung zündfähiger Gemische in der Atmosphäre wird die Atmosphäre mit Hilfe eines Lüfters durch einen katalytischen Reaktor zirkuliert, in dem der Wasserstoff mit dem Sauerstoff unter Wärmeentwicklung in Wasser oder Wasserdampf umgesetzt wird. Für die Führung des Gasstromes bei der Zirkulation durch den Gehäuseinnenraum zu dem Reaktor sind jedoch aufwendige Maßnahmen notwendig. So ist im bekannten Fall der Innenraum speziell für eine derartige Zirkulation gestaltet. Außerdem ist der Betrieb eines derartigen Systems nur möglich, bis sämtlicher Sauerstoff in der Atmosphäre aufgebraucht und das ursprüngliche Sauerstoffvolumen durch Produktwasser ersetzt ist. Die Betriebsdauer des Brennstoffzellensystems ist somit beschränkt, was einen Einsatz eines derartigen Systems in der Praxis meistens unmöglich macht.

Ausgehend hiervon ist es Aufgabe vorliegender Erfindung, ein Verfahren zur Behandlung wasserstoffhaltiger und sauerstoffhaltiger Restgase von Brennstoffzellen sowie ein Restgasbehandlungssystem anzugeben, mit denen die Betriebsdauer eines Brennstoffzellensystems verlängert werden kann.

Die Lösung dieser Aufgabe gelingt durch ein Verfahren gemäß Patentanspruch 1 und ein Restgasbehandlungssystem gemäß Patentanspruch 1. Vorteilhafte Ausgestaltungen sind jeweils Gegenstand der abhängigen Ansprüche.

Bei dem erfindungsgemäßen Verfahren zur Behandlung wasserstoffhaltiger und sauerstoffhaltiger Restgase von Brennstoffzellen, werden die Restgase einem Gaskreislauf zugeführt und das hierdurch entstehende Restgasgemisch in dem Gaskreislauf durch eine Einrichtung zur Umsetzung von Wasserstoff und Sauerstoff in Wasser zirkuliert, um die Menge an Wasserstoff und Sauerstoff in dem Restgasgemisch zu reduzieren. Erfindungsgemäß wird dabei ein Teil des Restgasgemischs aus dem Gaskreislauf abgeführt.

Die Erfindung geht dabei von der Überlegung aus, dass durch die Zirkulation des Restgasgemisches durch die Einrichtung zur Umsetzung von Wasserstoff und Sauerstoff in Wasser der Wasserstoffanteil und der Sauerstoffanteil und somit die Menge an Restgasgemisch soweit reduziert werden kann, dass die Gefahr einer Zündung vermieden und zumindest ein Teil des Restgasgemisches ohne Gefahr aus dem Gaskreislauf abgeführt werden kann.

Der Gaskreislauf ist dann wieder für "frisches" Restgas aus den Brennstoffzellen aufnahmebereit. Insgesamt kann durch diese Maßnahmen die Aufnahmefähigkeit und Behandlungskapazität von Restgasen aus den Brennstoffzellen und somit die Betriebsdauer der Brennstoffzellen vergrößert werden.

Bei Brennstoffzellen, die sich in einem von Außenluft abgeschlossenen Einbauraum befindet, wird der abgeführte Teil des Restgasgemisches vorzugsweise einem Gasspeicher zugeführt. Bei Brennstoffzellen, die sich in einem Einbauraum mit Umgebungsluft befindet, wird der abgeführte Teil des Restgasgemisches vorzugsweise in die Umgebungsluft eingeleitet.

Bei der Einrichtung zur Umsetzung von Wasserstoff und Sauerstoff in Wasser handelt es sich vorzugsweise um einen katalytischen Rekombinator (z.B. einen Platin-Aluminiumoxid-Rekombinator). Es kann aber auch ein katalytischer Reaktor zum Einsatz kommen.

Gemäß einer vorteilhaften Ausgestaltung des Verfahrens erfolgt das Abführen des Teils des Restgasgemisches aus dem Gaskreislauf bei Überschreitung eines vorgegebenen oder vorgebbaren Druckes des Restgasgemisches in dem Gaskreislauf, vorzugsweise zusätzlich wenn auch keine Umsetzung von Sauerstoff und Wasserstoff mehr stattfindet. Der Gehalt an Wasserstoff und/oder Sauerstoff hat dann ein Minimum erreicht bzw. ist vollständig abreagiert.

Im Fall einer Zuführung des Restgasgemisches zu einem Gasspeicher wird gemäß einer weiteren vorteilhaften Ausgestaltung der abgeführte Teil des Restgasgemisches wahlweise einem von zumindest zwei Gasspeichern zugeführt. Grundsätzlich wird aus Sicherheitsgründen ein leicht mit Sauerstoff angereichertes Restgasgemisch angestrebt. Wenn aber beispielsweise auch die Möglichkeit eines leicht mit Wasserstoff angereicherten Restgasgemisches besteht, werden diese beiden unterschiedlichen Restgasgemisch zur weiteren Erhöhung der Sicherheit von Vorteil jeweils unterschiedlichen Gasspeichern zugeführt und darin gespeichert.

Vorzugsweise wird dann ein abgeführtes Restgasgemisch mit einem Sauerstoffüberschuss einem ersten Gasspeicher und ein abgeführtes Restgasgemisch mit einem Wasserstoffüberschuss einem davon getrennten zweiten Gasspeicher zugeführt. Je nach Anreicherungsgrad des Restgasgemisches mit Sauerstoff und/oder Wasserstoff können dabei auch mehr als zwei voneinander getrennte Gasspeicher zum Einsatz kommen.

Das Abführen des Teils des Restgasgemisches aus dem Gaskreislauf kann auch in Abhängigkeit einer vorgegebenen oder vorgebbaren Gaszusammensetzung erfolgen. Zum Beispiel kann dies gezielt derart erfolgen, dass das abgeführte Restgasgemisch eine Gaszusammensetzung wir Luft hat. Diese Luft kann dann, insbesondere in außenluftunabhängigen Anwendungen, weiter genutzt werden (z.B. als Atemluft).

Gemäß einer weiteren vorteilhaften Ausgestaltung werden alternativ oder ergänzend der Sauerstoffanteil und/oder der Wasserstoffanteil des Restgasgemisches in dem Gaskreislauf erfasst und die Zufuhr an Restgasen in den Gaskreislauf und/oder die Abfuhr von Restgasgemisch aus dem Gaskreislauf erfolgt in Abhängigkeit von dem erfassten Sauerstoffanteil und/oder Wasserstoffanteil.

Vorzugsweise erfolgt aus Sicherheitsgründen die Abfuhr von Restgasgemisch, wenn ein Sauerstoffüberschuss in dem Restgasgemisch vorhanden ist.

Der Sauerstoffanteil und/oder Wasserstoffanteil bzw. dessen zeitliche Entwicklung kann beispielsweise Aufschluss dafür geben, ob noch eine Umsetzung von Sauerstoff und Wasserstoff zu Wasser stattfindet, oder ob dieser Prozess bereits geendet hat. Somit kann beispielsweise gezielt die Abfuhr von Restgasgemisch aus dem Gaskreislauf erfolgen, wenn der Sauerstoffanteil einen konstanten Wert einnimmt, weil keine Umsetzung mit Wasserstoff in Wasser mehr stattfindet.

Alternativ oder ergänzend kann eine Temperatur der Einrichtung zur Umsetzung von Wasserstoff und Sauerstoff in Wasser erfasst werden und die Zufuhr an Restgasen in den Gaskreislauf und/oder die Abfuhr von Restgasgemisch aus dem Gaskreislauf kann in Abhängigkeit von der erfassten Temperatur erfolgen. Auch die Temperatur bzw. deren zeitliche Entwicklung kann Aufschluss darüber geben, ob noch eine Umsetzung von Sauerstoff und Wasserstoff zu Wasser stattfindet, oder ob dieser Prozess bereits geendet hat. Somit kann beispielsweise auch hier gezielt die Abfuhr von Restgasgemisch aus dem Gaskreislauf erfolgen, wenn die Temperatur ausgehend von einem Normalwert, bei dem eine Umsetzung von Wasserstoff und Sauerstoff in Wasser erfolgt, auf einen niedrigeren Wert abgefallen ist, weil keine Umsetzung von Wasserstoff und Sauerstoff in Wasser mehr erfolgt.

Die Restgase umfassen dabei zumindest die Reaktionsgase der Brennstoffzellen, vorzusgweise auch noch Spülgase der Brennstoffzellen und/oder Ein- und Ausschaltgase der Brennstoffzellen und/oder Blow-Up-Gase oder Boil-Off-Gase von Flüssiggasspeichern, insbesondere sämtliche für den Betrieb der Brennstoffzellen verwendeten Gase. Somit sind keine weiteren zusätzlichen Gas-Entsorgungs- oder Gas-Behandlungssysteme mehr notwendig.

Gemäß einer weiteren vorteilhaften Ausgestaltung werden der Betrieb der Brennstoffzellen und die Behandlung der Restgase derart aufeinander abgestimmt gesteuert und/oder geregelt, dass das aus dem Gaskreislauf abgeführte Restgasgemisch eine vorgegebene oder vorgebbare Gaszusammensetzung aufweist, insbesondere die Gaszusammensetzung von Luft aufweist.

Ein erfindungsgemäßes Restgasbehandlungssystem für wasserstoffhaltige und sauerstoffhaltige Restgase von Brennstoffzellen umfasst
- einen Gaskreislauf für einen Zirkulationsbetrieb eines Gemisches der beiden Restgase, und
- eine Einrichtung zur Umsetzung von Wasserstoff und Sauerstoff in Wasser, wobei die Einrichtung in dem Gaskreislauf angeordnet ist, um die Menge an Wasserstoff und Sauerstoff in dem Restgasgemisch zu reduzieren,
wobei zumindest ein Teil des Restgasgemisches aus dem Gaskreislauf abführbar ist.

Gemäß einer vorteilhaften Ausgestaltung ist der abgeführte Teil des Restgasgemisches einem Gasspeicher zuführbar oder in Umgebungsluft einleitbar.

Das System weist hierzu von Vorteil einen in dem Gaskreislauf angeordneten Abzweig und ein Ventil zur Steuerung einer Abfuhr von Restgasgemisch aus dem Gaskreislauf über den Abzweig aufweisen.

Von Vorteil umfasst das System einen Drucksensor, der in dem Gaskreislauf angeordnet ist, und einen Druck des Restgasgemisches in dem Gaskreislauf erfasst, und eine Steuereinrichtung, die derart ausgebildet ist, dass sie das Abführen des Teils des Restgasgemisches aus dem Gaskreislauf in Abhängigkeit des erfassten Druckes des Restgasgemisches in dem Gaskreislauf steuert, vorzugsweise den Teil des Restgasgemisch aus dem Gaskreislauf bei Überschreitung eines vorgegebenen oder vorgebbaren Druckes des Restgasgemisches in dem Gaskreislauf abführt.

Gemäß einer weiteren vorteilhaften Ausgestaltung umfasst das System zumindest zwei Gasspeicher, wobei das Restgasgemisch wahlweise einem der Gasspeicher zuführbar ist, wobei vorzugsweise ein erster der Gasspeicher ein Gasspeicher für ein Restgasgemisch mit Sauerstoffüberschuss und ein zweiter der Gasspeicher ein Gasspeicher für ein Restgasgemisch mit Wasserstoffüberschuss ist.

Das System kann weiterhin umfassen:
- eine Einrichtung zur Erfassung der Gaszusammensetzung des Restgasgemisches in dem Gaskreislauf und
- eine Steuereinrichtung, die ausgebildet ist, das Abführen des Restgasgemisches aus dem Gaskreislauf in Abhängigkeit einer vorgegebenen oder vorgebbaren Gaszusammensetzung zu steuern.

Das System kann alternativ oder ergänzend auch umfassen:
- eine Einrichtung zur Erfassung des Sauerstoffanteils und/oder des Wasserstoffanteils des Restgasgemisches in dem Gaskreislauf und
- einer Steuereinrichtung, die ausgebildet ist, die Zufuhr an Restgasen in den Gaskreislauf und/oder die Abfuhr von Restgasgemisch aus dem Gaskreislauf in Abhängigkeit von dem erfassten Sauerstoffanteil und/oder Wasserstoffanteil zu steuern.

Weiterhin kann das System umfassen:
- eine Einrichtung zur Erfassung einer Temperatur der Einrichtung zur Umsetzung von Wasserstoff und Sauerstoff in Wasser und
- eine Steuereinrichtung, die ausgebildet ist, die Zufuhr an Restgasen in den Gaskreislauf und/oder die Abfuhr von Restgasgemisch aus dem Gaskreislauf in Abhängigkeit von der erfassten Temperatur zu steuern.

Die Restgase umfassen dabei zumindest die Reaktionsgase der Brennstoffzellen, vorzugsweise auch noch Spülgase der Brennstoffzellen und/oder Ein- und Ausschaltgase der Brennstoffzellen und/oder Blow-Up-Gase oder Boil-Off-Gase von Flüssiggasspeichern, insbesondere sämtliche für den Betrieb der Brennstoffzellen verwendeten Gase. Somit sind keine weiteren zusätzlichen Gas-Entsorgungs- oder Gas-Behandlungssysteme mehr notwendig.

Weiterhin kann das System eine Steuereinrichtung aufweisen, die ausgebildet ist, den Betrieb der Brennstoffzellen und die Behandlung der Restgase aufeinander abgestimmt derart zu steuern und/oder zu regeln, dass der aus dem Gaskreislauf abgeführte Teil des Restgasgemisch eine vorgegebene oder vorgebbare Gaszusammensetzung aufweist, insbesondere die Gaszusammensetzung von Luft, aufweist.

Die vorstehend erwähnten Steuereinrichtungen können auch in einer einzigen Steuerungseinrichtung zusammengefasst sein.

Die für das erfindungsgemäße Verfahren und seine vorteilhaften Ausgestaltungen genannten Vorteile gelten entsprechend für das das erfindungsgemäße System und seine vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Diese zeigen:
- FIG 1: einen Brennstoffzellenstapel mit Brennstoffzellen,
- FIG 2: ein Ausführungsbeispiel eines erfindungsgemäßen Restgasbehandlungssystems.

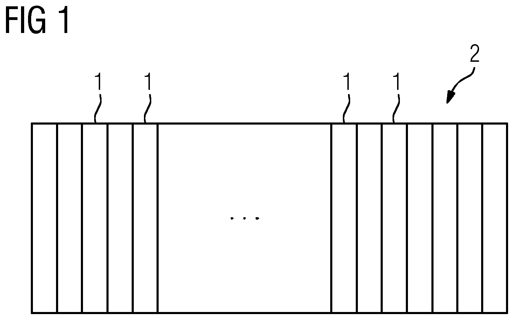

Eine Brennstoffzelle alleine liefert eine Betriebsspannung von unter einem Volt. Wie in FIG 1 gezeigt, werden daher üblicherweise eine Vielzahl von Brennstoffzellen 1 aufeinander gestapelt und zu einem Brennstoffzellenblock 2 zusammengefasst. In der Fachliteratur wird ein solcher Block 2 auch "Stack" genannt. Durch das In-Reihe-Schalten der Brennstoffzellen 1 des Brennstoffzellenblocks 2 kann die Betriebsspannung eines Brennstoffzellensystems einige 100 Volt betragen.

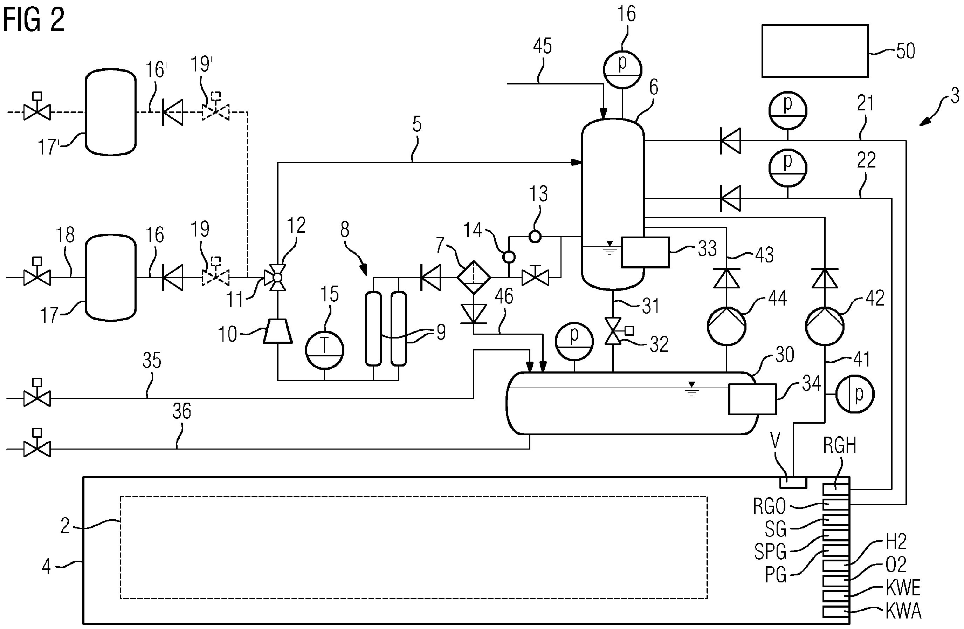

FIG 2 zeigt ein erfindungsgemäßes Restgasbehandlungssystem 3 zur Behandlung von Restgasen von Brennstoffzellen. Mit 4 ist dabei ein Brennstoffzellenmodul bezeichnet, das neben einem Brennstoffzellenblock wie in FIG 1 gezeigt noch weitere nicht näher gezeigte Einrichtungen wie Ventile, Sensoren, Wasserabscheider und Verteilerstrukturen für die Ver- und Entsorgung des Brennstoffzellenblock mit Betriebsmedien umfasst. Das Brennstoffzellenmodul 4 weist einen Anschluss H2 für die Zufuhr von Wasserstoff, einen Anschluss O2 für die Zufuhr von Sauerstoff, einen Anschluss KWE für die Zufuhr von Kühlwasser, einen Anschluss KWA für die Abfuhr von Kühlwasser, einen Anschluss RGH für die Abfuhr von wasserstoffhaltigem Restgas, einen Anschluss RGO für die Abfuhr von sauerstoffhaltigem Restgas, einen Anschluss SG für die Zufuhr von Schutzgas, einen Anschluss SPG für die Zufuhr von Spülgas und einen Anschluss PG für die Zufuhr von Pressgas auf.

Das Spülgas wird für eine Spülung der Gasräume der Brennstoffzellen 1 benötigt. Das Pressgas wird für eine Druckerzeugung mit Hilfe sogenannter Druckkissen im Brennstoffzellenblock 2 benötigt.

Das Restgasbehandlungssystem 3 umfasst einen Gaskreislauf 5, in den in Strömungsrichtung eines zirkulierenden Gases hintereinander ein Sammelbehälter in Form eines Vakuum-Tanks 6, ein Wasserabscheider 7, eine Einrichtung 8 zur Umsetzung von Wasserstoff und Sauerstoff in Wasser (hier in Form zweier parallel geschalteter Rekombinatoren 9, z.B. Platin-Aluminiumoxid-Rekombinatoren), ein Kompressor 10 und ein Abzweig 11 mit einem 3/2-Wegeventil 12 geschaltet bzw. angeordnet sind.

Eine Leitung 21 verläuft von dem Anschluss RGO des Brennstoffzellenmoduls 4 zu dem Vakuum-Tank 6 und dient zur Zufuhr von sauerstoffhaltigem Restgas aus dem Brennstoffzellenmodul 4 zu dem Vakuumtank 6.

Eine Leitung 22 verläuft von dem Anschluss RGH des Brennstoffzellenmoduls 4 zu dem Vakuumtank 6 und dient zur Zufuhr von wasserstoffhaltigem Restgas aus dem Brennstoffzellenmodul 4 zu dem Vakuumtank 6.

Zwischen dem Vakuumtank 6 und dem Wasserabscheider 7 sind ein Sauerstoffensor 13 und ein Wasserstoffsensor 14 in dem Gaskreislauf 5 angeordnet. Außerdem ist zwischen der Einrichtung 8 und dem Kompressor 10 ein Temperatursensor 15 in dem Gaskreislauf 5 angeordnet.

Ein an den Vakuum-Tank 6 angeschlossener Drucksensor 16 dient zur Erfassung oder Messung des Druckes in dem Vakuum-Tank 6 und somit in dem Gaskreislauf 5.

Das Restgasbehandlungssystem 3 umfasst weiterhin einen Produktwassertank 30, der über eine Leitung 31 und ein darin angeordnetes Ventil 32 mit dem Boden des Vakuum-Tanks 6 zur Abfuhr von Produktwasser aus dem Vakuum-Tank 6 in den Produktwassertank 30 verbindbar ist.

In dem Vakuum-Tank 6 befindet sich ein Sensor 33 zur Erfassung der Höhe des Pegels von Flüssigkeit in dem Vakuum-Tank 6.

Auch in dem Produktwassertank 30 befindet sich eine Sensor 34 zur Erfassung der Höhe des Pegels von Flüssigkeit in dem Vakuum-Tank 6.

Bei einer Evakuierung der Gasräume der Brennstoffzellen beim Ein-Schalten oder Abschalten des Brennstoffzellenmoduls 4 müssen Restgase aus den Brennstoffzellen abgeführt werden. Hierzu besteht eine Leitung 41 zwischen einem Anschluss V des Brennstoffzellenmoduls und dem Vakuum-Tank 6. In die Leitung 41 ist eine Vakuumpumpe 42 geschaltet, über die diese Restgase von dem Brennstoffzellenmodul 4 in den Vakuum-Tank 6 abgeführt werden können.

Weiterhin ist der Produktwassertank 30 über eine Leitung 43 mit einer darin angeordneten Vakuum-Pumpe 44 mit dem Vakuum-Tank 6 verbunden. Die Vakuum-Pumpe 44 sorgt dafür, dass der Druck in dem Produktwassertank 30 niedriger als der Druck in dem Vakuum-Tank 6 ist. An den Produktwassertank 30 sind weiterhin eine Leitung 35 und eine Leitung 36 angeschlossen. Die Leitung 35 dient zur Zufuhr von Stickstoff in den Produktwassertank 30 zur Abfuhr von Produktwasser. Über die Leitung 36 kann dann das Produktwasser aus dem Produktwassertank 30 abgeführt werden.

Der Wasserabscheider 7 dient dazu, von dem Restgasgemisch mitgeführtes Wasser abzutrennen, damit es nicht in die Rekombinatoren 9 gelangt.

Über eine Leitung 46 ist zudem der Wasserabscheider 7 mit dem Produktwassertank 30 zur Zufuhr abgeschiedenen Wassers verbunden.

Der Abzweig 11 ist über eine Leitung 16 mit einem Drucktank 17 verbunden. An dem Drucktank 17 ist wiederum eine Leitung 18 zu dessen Entleerung angeschlossen.

Optional kann ein zweiter Drucktank 17' an den Abzweig 11 angeschlossen sein, wobei dann über Ventile 19, 19' gesteuert werden kann, welcher der Drucktanks 17, 17' mit dem Abzweig 11 verbunden ist.

Optional kann an den Vakuum-Tank 6 auch eine Leitung 45 zur Zufuhr von Boil-Off-Gas bzw. Blow-Up-Gas aus nicht näher dargestellten Flüssigkeitsspeichern der Betriebsgase angeschlossen sein.

Eine Steuereinrichtung 50 ist drahtgebunden oder drahtlos mit den Sensoren (z.B. Temperatursensor 8, Drucksensor 16, Sauerstoffsensor 13, Wasserstoffsensor 14) und Aktoren des Brennstoffzellenmoduls und des Restgasbehandlungssystems (z.B. steuerbare Ventile wie z.B. das 3/2-Wege-Ventil 12, Kompressor 10, Vakuumpumpen 42, 44) verbunden und erfasst von diesen Signale oder Messwerte bzw. steuert deren Betriebszustand. Beim Betrieb des Restgasbehandlungssystems werden dem Vakuumtank 6 über die Leitung 21 ein sauerstoffhaltiges Restgas des Brennstoffzellenmoduls 4 und über die Leitung 22 ein wasserstoffhaltiges Restgas des Brennstoffzellenmoduls zugeführt und in dem Vakuumtank 6 vermischt. Im Fall einer Spülung der Gasräume der Brennstoffzellen 1 werden über diese Leitungen 21, 22 auch die Spülgase zugeführt. Außerdem werden dem Vakuumtank 6 über die Leitung 41 Einschalt- und Ausschaltgase des Brennstoffzellenmoduls 4 und optional über die Leitung 45 die Boil-Off-Gas bzw. Blow-Up-Gas zugeführt. Vorzugsweise werde sämtliche für den Betrieb der Brennstoffzellen entstehenden Restgase in den Vakuumtank 6 eingeleitet.

Das hierdurch in dem Vakuumtank 6 entstehende Restgasgemisch wird mittels des Kompressors 10 durch den Gaskreislauf 5 und somit auch durch die Einrichtung 8 zirkuliert bzw. umgewälzt. In der Einrichtung 8 wird in dem Restgasgemisch enthaltener Wasserstoff mit in dem Restgasgemisch enthaltenem Sauerstoff zu Wasser umgesetzt, welches in dem Vakuumtank 6 absetzt.

Der Wasserstoffanteil und der Sauerstoffanteil und somit die Menge an Restgasgemisch können hierdurch soweit reduziert werden kann, dass die Gefahr einer Zündung vermieden und zumindest ein Teil des Restgasgemisches ohne Gefahr aus dem Gaskreislauf 5 abgeführt werden kann.

Der Gaskreislauf 5 ist dann wieder für "frisches" Restgas aus den Brennstoffzellen aufnahmebereit. Insgesamt kann durch diese Maßnahmen die Aufnahmefähigkeit und Behandlungskapazität von Restgasen aus den Brennstoffzellen 1 und somit die Betriebsdauer der Brennstoffzellen 1 vergrößert werden.

Die Steuereinrichtung 50 erfasst über den Sensor 33 den Flüssigkeitspegel in dem Vakuum-Tank 6 und öffnet bei Überschreiten eines vorgegebene Flüssigkeitsniveaus in dem Vakuumtank 6 das Ventil 32, wodurch Produktwasser über die Leitung 31 in den Produktwassertank 30 abgeführt wird.

In entsprechender Weise erfasst die Steuereinrichtung 50 über den Sensor 34 den Flüssigkeitspegel in dem Produktwassertank 30 und veranlasst bei Überschreiten eines vorgegebenen Flüssigkeitsniveaus eine Zufuhr von Stickstoff über die Leitung 35, wodurch Produktwasser über die Leitung 36 aus dem Produktwassertank 30 abgeleitet wird.

Wenn der von der Steuereinrichtung 50 über den Sensor 16 erfasste Druck im Gaskreislauf 5 einen vorgegeben Wert überschreitet, öffnet diese das Ventil 12 zum dem Abzweig 11, wodurch zumindest ein Teil des Restgasgemisches aus dem Gaskreislauf 5 in den Drucktank 17 abgeführt wird. Wenn es die Einbauumstände erlauben, kann das Restgasgemisch alternativ auch in die Umgebungsluft eingeleitet werden.

Wenn zwei Druck-Tanks 17, 17' vorhanden sind, wertet die Steuereinrichtung 50 die über die Sensoren 13, 14 erfassten Sauerstoff- und Wasserstoffanteile aus und führt durch Steuerung der Ventile 19, 19' ein Restgasgemisch mit einem Sauerstoffüberschuss dem Drucktank 17 und ein Restgasgemisch mit einem Wasserstoffüberschuss dem Drucktank 17' zu.

Die Steuereinrichtung 50 kann die über die Sensoren 13, 14 erfassten Sauerstoff- und Wasserstoffanteile in dem Restgasgemisch auch dazu nutzen, das Abführen des Restgasgemisches aus dem Gaskreislauf 5 derart zu steuern, dass dies in Abhängigkeit einer vorgegebenen oder vorgebbaren Gaszusammensetzung erfolgt.

Beispielsweise kann die Steuereinrichtung 50 über die Sensoren 13, 14 den Sauerstoffanteil und/oder den Wasserstoffanteil des Restgasgemisches in dem Gaskreislauf messen und die Zufuhr an Restgasen in den Gaskreislauf und/oder die Abfuhr von Restgasgemisch aus dem Gaskreislauf derart steuern, dass diese in Abhängigkeit von dem gemessenen Sauerstoffanteil und/oder Wasserstoffanteil erfolgen.

Vorzugsweise erfolgt aus Sicherheitsgründen die Abfuhr von Restgasgemisch, wenn ein Sauerstoffüberschuss in dem Restgasgemisch vorhanden ist.

Anhand des erfassten Sauerstoff- und/oder Wasserstoffanteile oder dessen bzw. deren zeitlichem Verlauf kann beispielsweise darauf geschlossen werden, ob noch eine Umsetzung von Sauerstoff und Wasserstoff in Wasser erfolgt, oder ob dieser Prozess geendet hat. Vorzugsweise erfolgt die Abfuhr von Restgasgemisch über den Abzweig, wenn sowohl der Druck einen vorgegenen Grenzwert überschritten als auch die Umsetzung von Sauerstoff und Wasserstoff in Wasser geendet hat. Beispielsweise kann auch gezielt eine Abfuhr von Restgasgemisch aus dem Gaskreislauf erfolgen, wenn der Sauerstoffanteil einen konstanten Wert einnimmt, weil keine Umsetzung mit Wasserstoff in Wasser mehr stattfindet.

Die Steuereinrichtung 50 kann über den Sensor 15 auch die Temperatur der Einrichtung 8 zur Umsetzung von Wasserstoff und Sauerstoff in Wasser messen und die Zufuhr an Restgasen in den Gaskreislauf und/oder die Abfuhr von Restgasgemisch aus dem Gaskreislauf derart steuern, dass diese in Abhängigkeit von der gemessenen Temperatur erfolgen. Auch die Temperatur bzw. deren zeitliche Entwicklung kann Aufschluss darüber geben, ob noch eine Umsetzung von Sauerstoff und Wasserstoff zu Wasser stattfindet, oder ob dieser Prozess bereits geendet hat. Somit kann beispielsweise auch hier gezielt die Abfuhr von Restgasgemisch aus dem Gaskreislauf erfolgen, wenn die Temperatur ausgehend von einem Normalwert, bei dem eine Umsetzung von Wasserstoff und Sauerstoff in Wasser erfolgt, auf einen niedrigeren Wert abgefallen ist, weil keine Umsetzung von Wasserstoff und Sauerstoff in Wasser mehr erfolgt.

Mittels der Steuereinrichtung 50 kann auch ein Betriebsverfahren für das Gesamtsystem aus Brennstoffzellenmodul 4 und Restgasbehandlungssystem 3 realisiert werden, bei dem die Brennstoffzellen Restgase erzeugen, die wie vorstehend behandelt werden, und wobei der Betrieb der Brennstoffzellen und die Behandlung der Restgase aufeinander abgestimmt derart gesteuert und/oder geregelt werden, dass das aus dem Gaskreislauf 5 abgeführte Restgasgemisch eine vorgegebene oder vorgebbare Gaszusammensetzung aufweist, insbesondere die Gaszusammensetzung von Luft aufweist. Diese Luft kann dann für verschiedenste Anwendungen genutzt werden, z.B. als Atemluft in außenluftunabhängigen Systemen wie z.B. an Bord von Unterwasserschiffen.

## Patentansprüche

1. Verfahren zur Behandlung wasserstoffhaltiger und sauerstoffhaltiger Restgase von Brennstoffzellen (1), wobei
die Restgase einem Gaskreislauf (5) zugeführt und ein hierdurch entstehendes Restgasgemisch in dem Gaskreislauf (5) durch eine Einrichtung (8) zur Umsetzung von Wasserstoff und Sauerstoff in Wasser zirkuliert wird, um die Menge an Wasserstoff und Sauerstoff in dem Restgasgemisch zu reduzieren, **dadurch gekennzeichnet, dass** zumindest ein Teil des Restgasgemisches aus dem Gaskreislauf (5) abgeführt wird.

2. Verfahren nach Anspruch 1,
**dadurch gekennzeichnet, dass** der abgeführte Teil des Restgasgemisch einem Gasspeicher (17) zugeführt oder in Umgebungsluft eingeleitet wird.

3. Verfahren nach einem der vorhergehenden Ansprüche,
**dadurch gekennzeichnet, dass** das Abführen des Teils des Restgasgemisches aus dem Gaskreislauf (5) und dessen Zufuhr zu dem Gasspeicher (17) bei Überschreitung eines vorgegebenen oder vorgebbaren Druckes des Restgasgemisches in dem Gaskreislauf (5) erfolgt.

4. Verfahren nach einem der vorhergehenden Ansprüche,
**dadurch gekennzeichnet, dass** der abgeführte Teil des Restgasgemisches wahlweise einem von zumindest zwei Gasspeichern (17, 17') zugeführt wird.

5. Verfahren nach Anspruch 4,
**dadurch gekennzeichnet, dass** ein abgeführtes Restgasgemisch mit einem Sauerstoffüberschuss einem ersten Gasspeicher (17) und ein abgeführtes Restgasgemisch mit einem Wasserstoffüberschuss einem zweiten Gasspeicher (17') zugeführt wird.

6. Verfahren nach einem der vorhergehenden Ansprüche,
**dadurch gekennzeichnet, dass** das Abführen des Teils des Restgasgemisches aus dem Gaskreislauf (5) in Abhängigkeit einer vorgegebenen oder vorgebbaren Gaszusammensetzung erfolgt.

7. Verfahren nach einem der vorhergehenden Ansprüche,
**dadurch gekennzeichnet, dass** der Sauerstoffanteil und/oder der Wasserstoffanteil des Restgasgemisches in dem Gaskreislauf (5) erfasst wird und die Zufuhr an Restgasen in den Gaskreislauf und/oder die Abfuhr von Restgasgemisch aus dem Gaskreislauf (5) in Abhängigkeit von dem erfassten Sauerstoffanteil und/oder Wasserstoffanteil erfolgt.

8. Verfahren nach einem der vorhergehenden Ansprüche,
**dadurch gekennzeichnet, dass** eine Temperatur der Einrichtung (8) zur Umsetzung von Wasserstoff und Sauerstoff in Wasser erfasst wird und die Zufuhr an Restgasen in den Gaskreislauf (5) und/oder die Abfuhr von Restgasgemisch aus dem Gaskreislauf (5) in Abhängigkeit von der erfassten Temperatur erfolgt.

9. Verfahren nach einem der vorhergehenden Ansprüche,
**dadurch gekennzeichnet, dass** die Restgase zumindest die Reaktionsgase der Brennstoffzellen, vorzugsweise auch Spülgase der Brennstoffzellen und/oder Ein- und Ausschaltgase der Brennstoffzellen und/oder Blow-Up-Gase oder Boil-Off-Gase von Flüssiggasspeichern, insbesondere sämtliche für den Betrieb der Brennstoffzellen verwendeten Gase umfassen.

10. Verfahren nach einem der vorhergehenden Ansprüche,
**dadurch gekennzeichnet, dass** der Betrieb der Brennstoffzellen (1) und die Behandlung der Restgase derart aufeinander abgestimmt gesteuert und/oder geregelt werden, dass das aus dem Gaskreislauf (5) abgeführte Restgasgemisch eine vorgegebene oder vorgebbare Gaszusammensetzung aufweist, insbesondere die Gaszusammensetzung von Luft aufweist.

11. Restgasbehandlungssystem (3) für wasserstoffhaltige und sauerstoffhaltige Restgase von Brennstoffzellen (1), umfassend
- einen Gaskreislauf (5) für einen Zirkulationsbetrieb eines Gemisches der beiden Restgase,
- eine Einrichtung (8) zur Umsetzung von Wasserstoff und Sauerstoff in Wasser, wobei die Einrichtung in dem Gaskreislauf (8) angeordnet ist, um die Menge an Wasserstoff und Sauerstoff in dem Restgasgemisch zu reduzieren,
**dadurch gekennzeichnet, dass** zumindest ein Teil des Restgasgemisches aus dem Gaskreislauf (5) abführbar ist.

12. System (3) nach Anspruch 11,
**dadurch gekennzeichnet, dass** der abgeführte Teil des Restgasgemisches einem Gasspeicher (17) zuführbar oder in Umgebungsluft einleitbar ist.

13. System (3) nach einem der Ansprüche 11 bis 12,
**dadurch gekennzeichnet, dass** es einen in dem Gaskreislauf (5) angeordneten Abzweig (11) und ein Ventil (12) zur Steuerung einer Abfuhr von Restgasgemisch aus dem Gaskreislauf (5) über den Abzweig (11) aufweist.

14. System (3) nach einem der Ansprüche 11 bis 13,
**dadurch gekennzeichnet, dass** es weiterhin umfasst:
- einen Drucksensor (16), der in dem Gaskreislauf angeordnet ist, und einen Druck des Restgasgemisches in dem Gaskreislauf (5) erfasst, und
- eine Steuereinrichtung (50), die derart ausgebildet ist, dass sie das Abführen des Teils des Restgasgemisches aus dem Gaskreislauf in Abhängigkeit des erfassten Druckes des Restgasgemisches in dem Gaskreislauf steuert, vorzugsweise den Teil des Restgasgemisch aus dem Gaskreislauf bei Überschreitung eines vorgegebenen oder vorgebbaren Druckes des Restgasgemisches in dem Gaskreislauf abführt.

15. System (3) nach einem der Ansprüche 11 bis 14,
**dadurch gekennzeichnet, dass** es zumindest zwei Gasspeicher (17, 17') umfasst, wobei das Restgasgemisch wahlweise einem der Gasspeicher zuführbar ist, wobei vorzugsweise ein erster der Gasspeicher (17) ein Gasspeicher für ein Restgasgemisch mit Sauerstoffüberschuss und ein zweiter der Gasspeicher (17') ein Gasspeicher für ein Restgasgemisch mit Wasserstoffüberschuss ist.
